# EUROPÄISCHE PATENTSCHRIFT

(11) **EP 1 782 407 B1**
(45) Veröffentlichungstag und Bekanntmachung des Hinweises auf die Patenterteilung: **14.09.2011**
(21) Anmeldenummer: 05776186.8
(22) Anmeldetag: 15.07.2005
(51) Int. Cl.: G08G 1/16, B62D 15/02, B60Q 1/52

(54) **VERFAHREN UND VORRICHTUNG ZUR FAHRERINFORMATION**
DRIVER INFORMATION METHOD AND DEVICE
PROCEDE ET DISPOSITIF D'INFORMATION DU CONDUCTEUR

(30) Priorität: 19.08.2004 DE 102004040143
(43) Veröffentlichungstag der Anmeldung: 09.05.2007
(73) Patentinhaber: ROBERT BOSCH GMBH, 70442 Stuttgart (DE)
(72) Erfinder: MAASS, Alexander, 71229 Leonberg (DE)
(86) Internationale Anmeldenummer: PCT/EP2005/053418
(87) Internationale Veröffentlichungsnummer: WO 2006/018359

(56) Entgegenhaltungen:
- EP-A- 0 736 414
- EP-A- 1 531 112
- DE-A1- 10 311 518
- US-A1- 2004 262 063

## Beschreibung

### Stand der Technik

Die Erfindung betrifft ein Verfahren und eine Vorrichtung zur Fahrerinformation, insbesondere auf der Basis von Fahrspurinformationen.

Fahrerassistenzsysteme, welche auf der Basis von Fahrspurinformationen arbeiten, sind im Stand der Technik bekannt. Ein Beispiel für ein solches Fahrassistenzsystem ist ein Warnsystem, welches den Fahrer bei Verlassen der Fahrspur bzw. bei drohendem Verlassen der Fahrspur warnt. Ein derartiges System zeigt beispielsweise die EP 1074430 A1, bei welcher mit Bildsensorsystemen die Fahrbahn (Fahrspur), auf der sich das Fahrzeug bewegt, ermittelt wird und der Fahrer gewarnt wird, wenn das Fahrzeug diese Fahrspur verlässt bzw. zu verlassen droht. Ferner beschreiben die DE-A 103 11 518 sowie die DE-A 102 38 215 derartige Fahrerassistenzsysteme. Zur Erfassung der Fahrspur werden in diesen Fällen Bildsensorsysteme verwendet, welche im Fahrzeug eingebaut sind und welche die Szene vor dem Fahrzeug aufnehmen. Aus den aufgenommenen Bildern der Fahrspurrandmarkierungen werden die Parameter der Fahrspur und damit die Fahrspur selbst ermittelt. Die Ermittlung der Fahrspur hängt wesentlich von der Güte der Fahrspurrandmarkierungen ab.

Aus der DE 19627 938 A1 ist ein Beispiel für die Erkennung und Modellierung von Fahrbahnrandmarkierungen aus Videobildern bekannt, wobei als Parameter unter anderem Fahrbahnbreite, Fahrbahnkrümmung, Krümmungsänderung und seitlicher Versatz des Fahrzeugs ermittelt werden.

Die Schrift EP 0736414 A2 zeigt ein videobasiertes System zur Fahrbahnrandkontourdetektion, wobei Markierungslinien von Fahrbahnbegrenzungen unterschieden werden, der befahrbare Bereich ermittelt und eine Warnung abhängig von der äußeren Begrenzung des befahrbaren Bereichs ausgelöst wird.

### Vorteile der Erfindung

Die Maßnahme, bei einem Spurverlassenswarner und mehreren erkannten Linien, die Fahrbahnrandmarkierungen entsprechen, geeignete Linien auszuwählen vermeidet wirksam unnötige Warnungen bzw. Fehlwarnungen, die für den Fahrer in der jeweiligen Betriebssituation nicht nachvollziehbar sind. Dabei ist es besonders vorteilhaft, als Randmarkierungen für den Spurverlassenswarner die von der Fahrzeugsposition links und rechts jeweils entferntesten Linien, die Fahrspurrandmarkierungen sind, auszuwählen.

Besondere Vorteile werden so bei sich verzweigenden Fahrbahnrandmarkierungen, beispielsweise Ausfahrten, Baustellenmarkierungen, etc. erreicht, wobei besonders in solchen Situationen unnötige Warnungen vermieden werden.

Besonders vorteilhaft ist, nach einer bestimmten Zeit oder Entfernung anhand des tatsächlichen Kurses des Fahrzeuges die zur Spurverlassenswarnung zu berücksichtigenden Fahrbahnrandmarkierungen neu auszuwählen. Damit wird die Warnbereitschaft des Spurverlassenswarners auch bei mehreren Fahrbahnranamarkiderungen auf der Straße wiederhergestellt.

Insgesamt wird in vorteilhafter Weise ein für den Fahrer akzeptables Warnverhalten bewirkt.

Besonders vorteilhaft ist, dass Fehlwarnungen auch dann vermieden werden, wenn keine weiteren Hinweise wie beispielsweise ein gesetzter Blinker für die Auswahl von Linien für den Spurverlassenswarner vorliegen, die Fahrbahnrandmarkierungen sein können.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformel näher erläutert. Figur 1 zeigt dabei ein Blockschaltbild eines Fahrerassistenzsystems, welches insbesondere zur Fahrerwarnung bzw. zur Reaktion bei drohendem Verlassen der Fahrspur durch das Fahrzeug ausgebildet ist. In den Figuren 2 bis 4 sind Fahrsituationen dargestellt, in denen die beschriebene Vorgehensweise Anwendung findet. In Figur 5 schließlich ist ein Ablaufdiagramm skizziert, welches eine bevorzugte Realisierung der Vorgehensweise als Rechnerprogramm skizziert. In Figur 6 ist eine Vorgehensweise für die Linienauswahl abhängig vom Kurs des Fahrzeugs dargestellt.

### Beschreibung von Ausführungsbeispielen

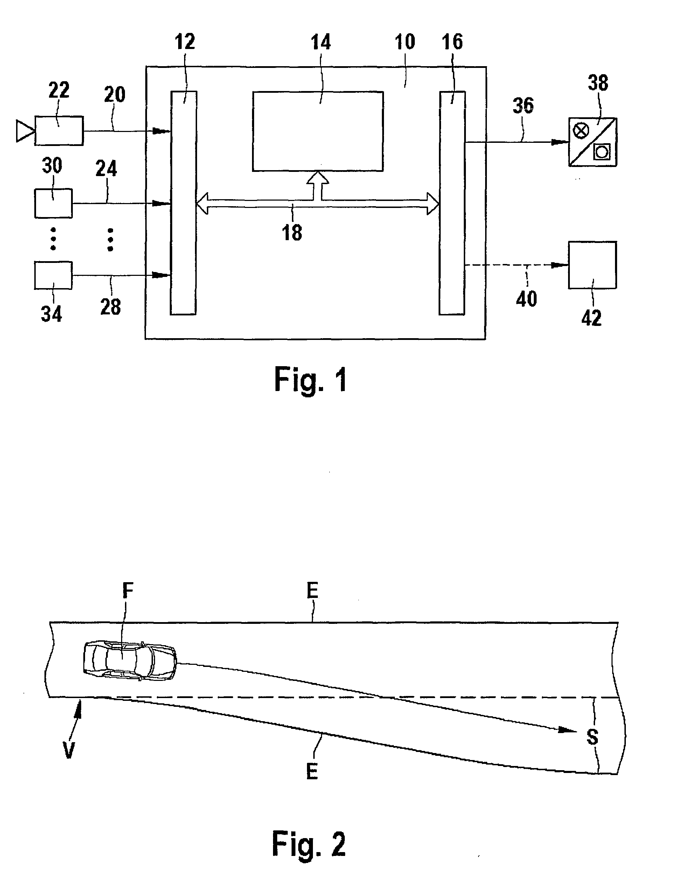

Figur 1 zeigt eine Vorrichtung, welche zur Warnung des Fahrers bzw. zur Reaktion bei Verlassen der Fahrspur durch das Fahrzeug dient. Gezeigt ist eine Steuer- bzw. Auswerteeinheit 10, welche eine Eingangsschaltung 12, einen Mikrocomputer 14 sowie eine Ausgangsschaltung 16 aufweist. Diese Elemente sind mit einem Bussystem zum gegenseitigen Datenaustausch miteinander verbunden. Der Eingangsschaltung 12 werden Eingangsleitungen von verschiedenen Messeinrichtungen zugeführt, über die Messsignale bzw. Messinformationen übermittelt werden. Eine erste Eingangsleitung 20 verbindet die Eingangsschaltung 12 mit einem Bildsensorsystem 22, welches im Fahrzeug angeordnet ist und welches die Szene vor dem Fahrzeug aufnimmt. Entsprechende Bilddaten werden über die Eingangsleitung 20 übermittelt. Ferner sind Eingangsleitungen 24 bis 28 vorgesehen, welche die Eingangsschaltung 12 mit Messeinrichtungen 30 bis 34 verbinden. Bei diesen Messeinrichtungen handelt es sich beispielsweise um Messeinrichtungen zur Messung der Fahrzeuggeschwindigkeit, zur Erfassung des Lenkwinkels sowie zur Erfassung weiterer Betriebsgrößen des Fahrzeugs, welche im Zusammenhang mit der Funktion des Fahrerassistenzsystems Bedeutung haben. Über die Ausgangsschaltung 16 und die Ausgangsleitung 36 wird wenigstens eine Warneinrichtung 38 angesteuert, beispielsweise eine Warnlampe und/oder ein Lautsprecher für eine akustische Warnung und/oder für eine Sprachausgabe und/oder ein Display für die Anzeige eines Bildes, mit deren Hilfe der Fahrer vor dem drohenden Verlassen der Fahrspuren informiert bzw. gewarnt wird. Auch eine haptische Warnung (z.B. Lenkradvibration) kann vorgesehen sein. In einem anderen Ausführungsbeispiel ist alternativ oder zusätzlich vorgesehen, über die Ausgangsschaltung 16 und eine Ausgangsleitung 40 ein Stellsystem 42 anzusteuern, welches automatisch beispielsweise durch Eingriff in die Lenkung des Fahrzeugs das Fahrzeug wieder in die Spur zurückführt und so das Verlassen der Fahrspur verhindert.

Spurdaten werden in einer Ausführung entsprechend der im eingangs genannten Stand der Technik ermittelt, wobei Fahrbahnmodellparameter durch Analyse des erfassten Bildes nach Maßgabe einer die Kameradaten umfassenden Abbildungsvorschrift ermittelt werden und an das gemessene Bild angepasst werden. So analysiert das Fahrerassistenzsystem das vom Bildsensor erfasste Bild-und-ermittelt Linien im Bild, die die Fahrspurrandmarkierungen (z.B. Mittellinien, etc.) sind. Die Verläufe der ermittelten Fahrspurrandmarkierungen (links und rechts) werden dann mathematisch durch Funktionen angenähert, z.B. als Klothoidenmodell, beispielsweise angenähert durch ein Polynom zweiter Ordnung. Parameter dieser Gleichungen sind z.B. Krümmung und Krümmungsänderung, der Abstand des Eigenfahrzeugs zur Randmarkierungen nach links und nach rechts. Ferner kann der Winkel zwischen der Tangente der berechneten Spur und der Bewegungsrichtung des eigenen Fahrzeugs ermittelt werden. Die auf diese Weise ermittelte Fahrspurinformation wird dann dem Assistenzsystem zugeführt, welches anhand der Eigentrajektorie(n) des Fahrzeugs (ermittelt z.B. auf der Basis der Gierrate) ein drohendes Überschreiten der Fahrspur erkennt und zum geeigneten Zeitpunkt den Fahrer warnt bzw. Gegenmaßnahmen einleitet.

Diese Vorgehensweise funktioniert zuverlässig, solange auf der Fahrbahn lediglich zwei Linien zu erkennen sind, die beide die zwei Fahrbahnrandmarkierungen (linker und rechter Fahrbahnrand) repräsentieren. Es gibt jedoch auch Fahrsituationen, in denen aus dem Kamerabild mehrere Linien (Fahrbahnrandmarkierungen und Linien, die als solche interpretiert werden können) zu ermitteln sind, beispielsweise bei neu anfangenden Fahrspuren, beim Übergang beispielsweise von einer zweispurigen auf eine vierspurige Straße (oder bei Ausfahrten), bei ehemaligen Markierungen, bei Asphaltnahtstellen, die als Fahrspurmarkierung interpretiert werden können, oder bei Baustellen, bei denen über die bestehenden Fahrspurmarkierungen weitere Fahrspurmarkierungen angebracht sind. Das bestehende System würde den Fahrer warnen, wenn er beispielsweise in die neu angefangene Fahrspur ohne gesetzten Blinker einfährt. Das System würde auch warnen, wenn die irgendwie geartete Linie (zum Beispiel Asphaltnaht, Kontrast an verschieden hellen Fahrbahnbelegen, alte ungültige Baustellenmarkierung oder Ähnliches) fälschlicherweise als Fahrspurmarkierung interpretiert wird. Auch bei aktuellen Baustellenmarkierungen ist eine sichere Auswahl der gültigen Fahrspurmarkierung nicht immer möglich, so dass auch hier möglicherweise nicht nachvollziehbare Fahrerwarnungen oder Reaktionen erzeugt werden. Somit ist in allen den genannten Fällen die möglicherweise erzeugte Warnung für den Fahrer nicht nachvollziehbar, insbesondere auch in den Fällen, in denen trotz Halten der Fahrspur durch den Fahrer eine Warnung erfolgt, beispielsweise weil er eine Asphaltnaht überfährt.

In den Figuren 2 bis 4 sind Verkehrssituationen dargestellt, in welchen die oben genannten Probleme auftreten können. Figur 2 zeigt eine Verkehrssituation, in der eine Fahrspur neu beginnt. Überfährt das Fahrzeug F die gestrichelte Fahrbahnmarkierung V bis S, wie in Figur 2 durch den Pfeil angedeutet, so würde eine Fahrerwarnung erfolgen, wenn die Linie V-S zur Ermittlung des Warnzeitpunkts herangezogen wird. Um eine solche, für den Fahrer nicht nachvollziehbare Warnung zu vermeiden, und um ein für den Fahrer akzeptables Warnverhalten zu bewirken, wird wie nachfolgend im Detail beschrieben bei einer Verzweigung von Fahrbahnrandmarkierungslinien (Punkt V) zunächst für die Ermittlung der Warnung die jeweils fahrzeugentferntere Linie (die beiden durch "E" gekennzeichneten Linien) verwendet. Später, beispielsweise nach einer bestimmten Fahrstrecke (beispielsweise 50 Meter) oder einer bestimmten Fahrzeit wird anhand des tatsächlich gefahrenen Kurses des Fahrzeugs (abgeleitet beispielsweise aus dem Lenkwinkel) entschieden, ob für danach folgende Warnungen eine fahrzeugnähere Linie verwendet werden soll. Im gezeigten Beispiel der Figur 2 bedeutet dies, dass ab einer bestimmten Position bzw. einem bestimmten Zeitpunkt die beiden mit "S" gekennzeichneten Linien dem Spurverlassenswarner zugrunde gelegt werden. Eine Warnung durch Überfahren der gestrichelten Linie V-S entsteht in diesen Fällen nicht, da für eine bestimmte Strecke oder Zeit die mit E markierten Linien der Spurverlassenswarnung zugrunde gelegt werden.

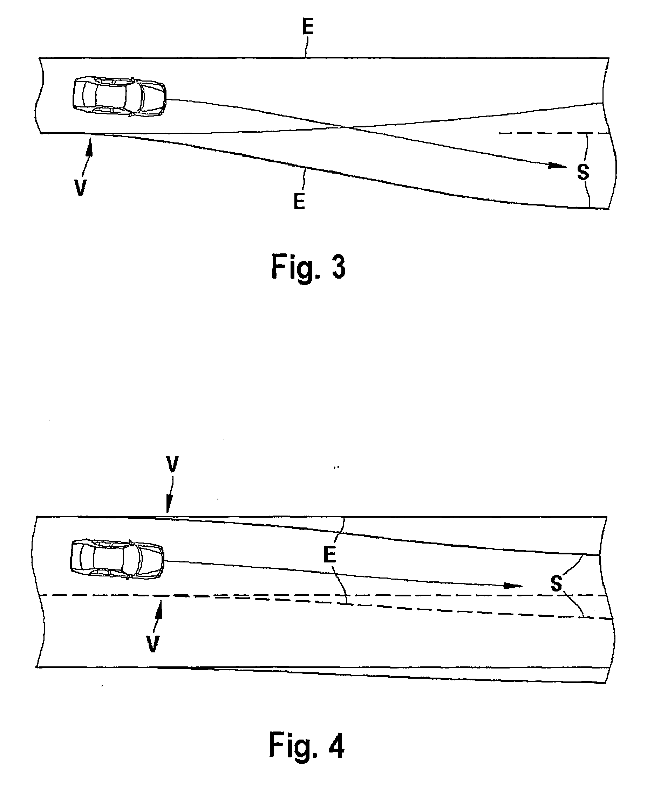

Entsprechendes gilt für die Verkehrssituation, die in Figur 3 dargestellt ist. Auch hier verzweigen Linien, im vorliegenden Fall im Punkt V in die tatsächliche Randmarkierung E und eine Asphaltnaht (schwarzer Strich), die vom Fahrzeug überfahren wird. Auch hier wird bei erkannten verzweigten Linien (Punkt V) der Spurverlassenswarnung die fahrzeugfernere Linie E zugrunde gelegt. Nach einer bestimmten Fahrstrecke oder Fahrzeit werden dann aufgrund des zukünftigen Kurses des Fahrzeugs fahrzeugnähere Linien herangezogen (Linien S).

Figur 4 zeigt die Verkehrssituation "Baustelle". Hier ergeben sich Verzweigungen V der Fahrbahnrandmarkierungen. Entsprechend der oben skizzierten Vorgehensweise werden zunähst nach der erkannten Verzweigung die fahrzeugferneren Linien E der Spurverlassenswarnung zugrunde gelegt. Nach einer bestimmten Fahrstrecke oder Fahrzeit wird anhand des dann vorliegenden Kurses des Fahrzeugs fahrzeugnähere Linien S als Basis für den Spurverlassenswarner bestimmt.

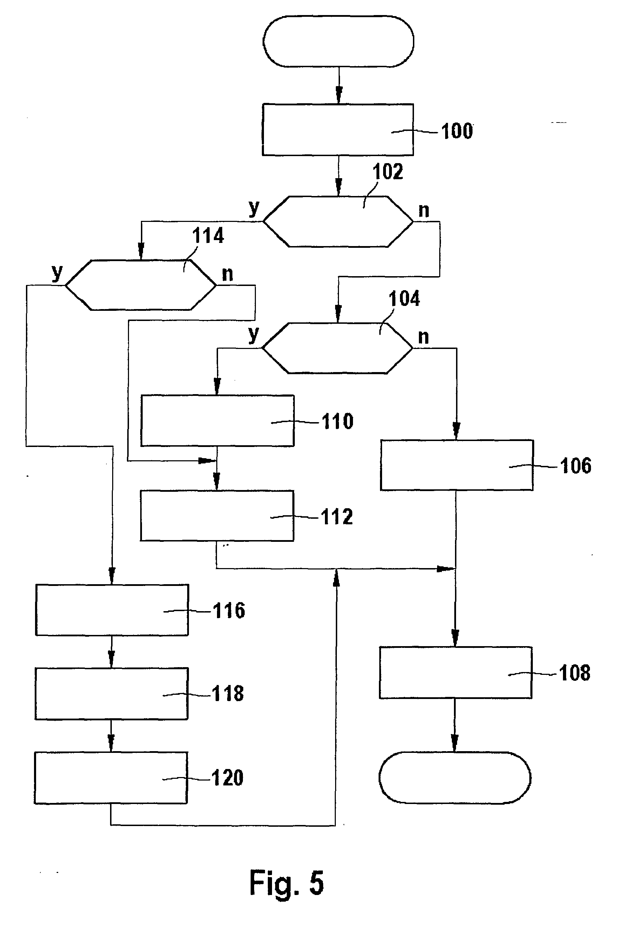

Die Realisierung der skizzierten Vorgehensweise erfolgt im Rahmen eines Programmes der Rechnereinheit 14. Das in Figur 5 dargestellte Flussdiagramm skizziert ein derartiges Programm. Das skizzierte Programm wird nach der Aktivierung der Spurverlassenswarnerfunktion zyklisch durchlaufen.

Im ersten Schritt 100 werden die Daten zu den als mögliche Fahrbahnrandmarkierungen erkannten Fahrbahnlinien eingelesen. Im bevorzugten Ausführungsbeispiel werden diese Daten beispielsweise in Form von Gleichungsparametern höherwertiger Polynome durch Analysierung wenigstes eines Kamerabildes der Szene vor dem Fahrzeug übermittelt gewonnen. Entsprechendes ist in dem eingangsgenannten Stand der Technik beschrieben. Im darauffolgenden Schritt 102 wird eine setzbare Marke auf einen bestimmten Wert hin, beispielsweise 1, überprüft. Ist die Marke nicht auf den Wert 1 gesetzt, d.h. sind in einem der letzten Durchläufe keine Linienverzweigungen bzw. mehrere Linien erkannt worden, so wird im darauffolgenden Schritt 104 anhand der eingelesenen Spurdaten überprüft, ob mehr als zwei Datensätze vorliegen, die als Fahrspurrandmarkierungen identifiziert wurden, insbesondere ob Schnittpunkte zwischen zwei Spurdatensätzen vorliegen. Das heißt es wird überprüft, ob mehr als zwei Linien erkannt wurden und/oder ob sich eine Linie in wenigstens zwei Linien verzweigt. Da die Spurdaten im bevorzugten Ausführungsbeispiel als Polynomdatensätze vorliegen, erfolgt die Überprüfung anhand der Anzahl der Datensätze, ggf. unter Berücksichtigung der Position der Linien zum Fahrzeug (z.B. links oder rechts), und/oder anhand von berechneten Schnittpunkten der aus den Datensätzen abgeleitete Polynomverläufe. Sind lediglich Datensätze zu zwei Linien (eine links, die andere rechts vom Fahrzeug) vorhanden, so werden im Schritt 106 diesen beiden Datensätzen als Randmarkierungen zugeordnet und dem Spurverlassenswarner zugrunde gelegt. Im Schritt 108 wird dann die bekannte Funktionalität des Spurverlassenwarners auf der Basis dieser Randmarkierungen berechnet und gegebenenfalls, wenn ein Verlassen der Fahrspur droht, eine Warnung ausgegeben.

Hat Schritt 104 ergeben, dass Verzweigungen in den Linien oder mehr als zwei Datensätze vorliegen, so wird die Marke auf den Wert 1 gesetzt (Schritt 110). In einer Ausführung wird mit den erneuten Setzen der Marke nach Rücksetzen (siehe nachfolgend Schritt 120) der Ablauf einer bestimmten Zeit oder Fahrstrecke gewartet, um ein ständiges Hin- und Herschalten zu vermeiden. Im darauf folgenden Schritt 112 werden dann die zwei vom Fahrzeug entferntesten (eine Links, die andere rechts), das heißt die äußersten Linien bzw. die zugehörigen Datensätze den beiden Randmarkierungen dem Spurverlassenswarners zugeordnet. Nach Schritt 112 folgt Schritt 108, in dem der Spurverlassenswarner auf der Basis der im Schritt 112 als Randmarkierungen zugeordneten Datensätzen ein Verlassen der Fahrspur abschätzt und notfalls eine Warnung erzeugt.

Hat Schritt 102 ergeben, dass die Marke auf den Wert 1 gesetzt ist, das heißt dass eine Verzweigung von Linien und /oder mehr als zwei Liniendatensätze, die als Randmarkierungen in Frage kommen, vorliegen, so wird im Schritt 114 überprüft, ob das Fahrzeug seit Setzen der Marke eine vorgegebene Entfernung, beispielsweise 50 Meter, zurückgelegt hat. Dies erfolgt auf der Basis von Raddrehzahlsignalen oder anderen Entfernungssensoren. Der gemessene Weg wird mit einem Maximalwert verglichen. Ist der Maximalwert noch nicht erreicht, so wird mit Schritt 112 fortgefahren und der Spurverlassenswarner im Rahmen der Äußersten als Randmarkierungen in Frage kommenden Datensätzen betrieben. Ist die maximale Entfernung jedoch erreicht, so wird im Schritt 116 der tatsächliche zurückgelegte Kurs des Fahrzeugs bestimmt. Im bevorzugten Ausführungsbeispiel erfolgt dies auf der Basis der Position des Fahrzeugs innerhalb der verschiedenen Randmarkierungslinien.

Anstelle der oben genannten Entfernung wird in einem anderen Ausführungsbeispiel im Schritt 114 zusätzlich oder alternativ ein Fahrzeitwert seit Setzen der Marke überprüft und bei Überschreiten einer maximalen Fahrzeit mit Schritt 116, ansonsten mit Schritt 112 fortgefahren.

Nach Bestimmung des Kurses des Fahrzeugs werden die Datensätze als berücksichtigende Randmarkierungen ausgewählt, die dem Kurs des Fahrzeugs entsprechen (Schritt 118).

Im darauffolgenden Schritt wird die Marke auf den Wert Null gesetzt (Schritt 120) und daraufhin der Spurverlassenswarner im Schritt 108 auf der Basis der aktuellen Randmarkierungsauswahl betrieben.

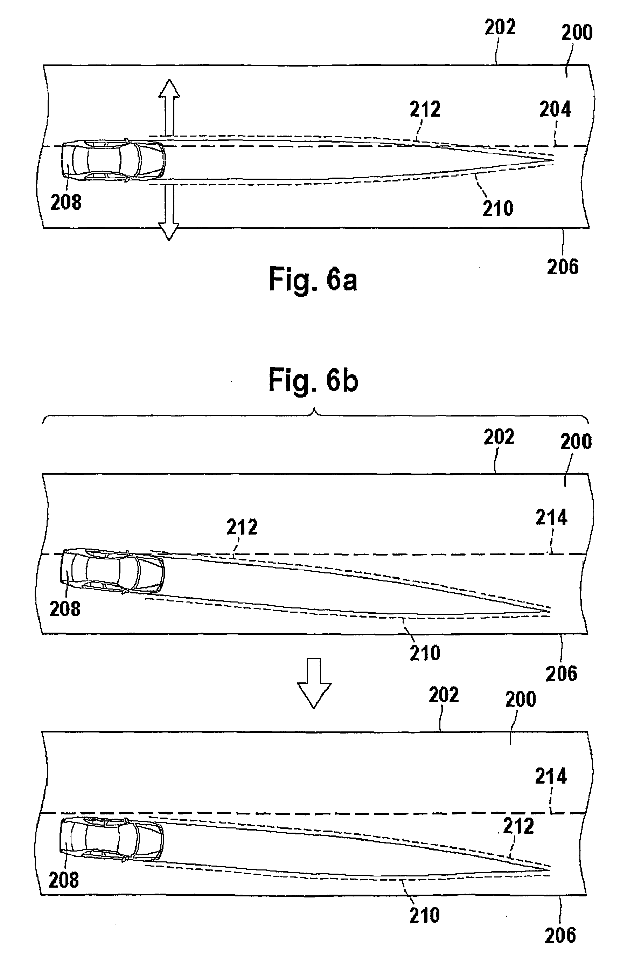

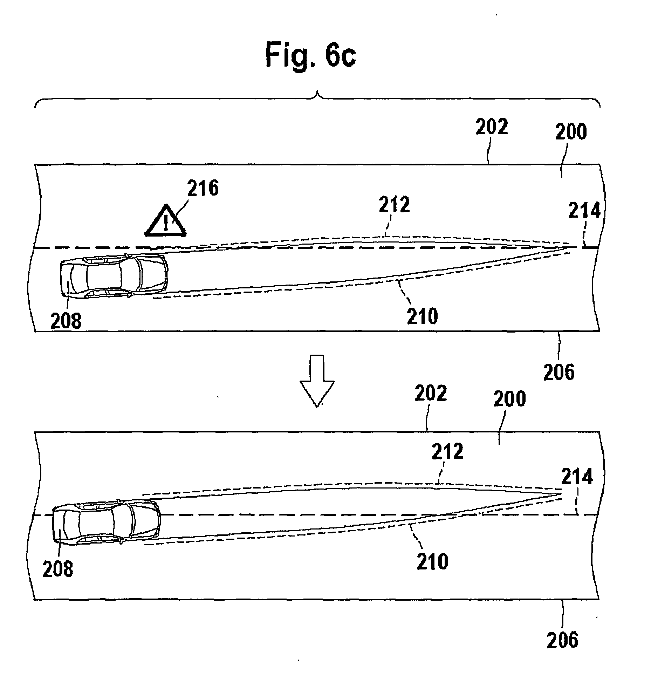

Figur 6 skizziert die Vorgehensweise zur Auswahl der relevanten Linien abhängig vom Kurs des Fahrzeugs, In Figur 6a ist eine Fahrbahn 200 mit drei Fahrbahnrandlinien 202, 204, 206 dargestellt. Ferner ist ein Fahrzeug 208 gezeigt sowie die vom Spurverlassenswarner gemäß der in der DE 103 11 518 A1 beschriebenen gebildeten Warntrajektorien links und rechts 210, 212. Die Warntrajektorien repräsentieren dabei den unter Berücksichtigung möglicher Lenkkorrekturen des Fahrers mögliche Kurs des Fahrzeugs. Schneidet eine Trajektorie die zugeordnete relevante Linie (rechte Trajektorie die rechte Linie, linke Trajektorie die linke), so wird gewarnt. Zunächst werden gemäß Figur 6a die fahrzeugentfernten Linien 210, 212 als relevante Linien.

In Figur 6b ordnet sich das Fahrzeug in einer Spur ein. Sobald sich eine Linie (214) ausserhalb der Warntrajektorie aber näher am Fahrzeug befindet als die bisherige relevante Linie 202 wird die Linie 214 als relevante Linie vorgegeben. In einer anderen Ausführung wird nach Ablauf eine Zeit oder Fahrstrecke überprüft, ob diese Liniekonstellation vorliegt und wenn ja, umgeschaltet.

An diesen Linie wird solange festgehalten, bis eine Warnung 216 erfolgt (Figur 6c). Nach der Warnung wird die relevante Linie 214 verlassen und die nächstliegende Linie (hier 202) auf derselben Fahrzeugseite, die außerhalb der Warntrajektorie liegt, als relevante Linie vorgegeben.

Die Realisierung erfolgt durch mathematische Behandlung von Kurvengleichungen.

Zusammenfassend wird also bei einem Verfahren zur Fahrerinformation, bei welchem eine Warnung für den Fahrer erzeugt wird, wenn das Fahrzeug droht die Fahrspur zu verlassen bzw. die Fahrspur verlässt, und die Warnung auf der Basis von Fahrbahnrandlinien ermittelt wird, bei einer erkannten Linienverzweigung in mehreren Linien wenigstens eine äußerste Linie zur Ermittlung der Warnung ausgewählt wird. Sind auf beiden Fahrzeugsseiten Linienverzweigungen in mehrere Linien, die Fahrbahnrandlinien sein können, vorhanden, so wird auf beiden Seiten jeweils die äußerste Linie herangezogen.

## Patentansprüche

1. Verfahren zur Fahrerinformation, wobei eine Warnung (38) für den Fahrer erzeugt wird, wenn das Fahrzeug droht die Fahrspur zu verlassen bzw. die Fahrspur verlässt, wobei die Warnung auf der Basis von Fahrbahnrandlinien ermittelt wird, **dadurch gekennzeichnet, dass** bei erkannten (104) mehreren Linien (E, S), die Fahrspurrandmarkierungen sind, die fahrzeugentferntere Linie (E) zur Ermittlung der Warnung (216) ausgewählt (112) wird.

2. Verfahren nach Anspruch 1, **dadurch gekennzeichnet, dass** bei erkannter Verzweigung (V) in 2 oder mehr Linien (E, S) die fahrzeugentferntere Linie (E) zur Ermittlung der Warnung ausgewählt wird.

3. Verfahren nach einem der vorhergehenden Ansprüche, **dadurch gekennzeichnet, dass** die fahrzeugentferntere Linie für eine vorgegebene Fahrstrecke und / oder Fahrzeit der Warnung zugrunde liegen.

4. Verfahren nach einem der vorhergehenden Ansprüche, **dadurch gekennzeichnet, dass** aus den ermittelten Fahrbahnrandlinien Verzweigungen ermittelt werden, ab denen die fahrzeugentferntere Linie der Warnung zugrunde gelegt werden.

5. Verfahren nach einem der vorhergehenden Ansprüche, **dadurch gekennzeichnet, dass** der Kurs des Fahrzeugs (210, 212) bestimmt wird, und auf der Basis des Kurses die Fahrbahnrandlinie (202, 204, 206) ausgewählt wird, die der Warnung zugrunde liegen.

6. Verfahren nach Anspruch 5, **dadurch gekennzeichnet, dass** eine neue Auswahl der relevanten Linie nach einer bestimmten Fahrstrecke und / oder Fahrzeit nach Erkennen einer Verzweigung (V) wenigstens einer Linie und / oder von mehreren Fahrbahnrandlinien erfolgt.

7. Verfahren nach einem der vorhergehenden Ansprüche, **dadurch gekennzeichnet, dass** eine Warnung (216) ausgegeben wird, wenn das Fahrzeug die ausgewählte Linie zu überschreiten droht oder überschreitet.

8. Verfahren nach einem der vorhergehenden Ansprüche, **dadurch gekennzeichnet, dass** die Warnung (38) optisch, akustisch und /oder haptisch erfolgt, und /oder ein die Überschreitung der Fahrbahnrandlinie entgegenwirkender Lenkeingriff (42) darstellt.

9. Verfahren nach einem der vorhergehenden Ansprüche, **dadurch gekennzeichnet, dass** nach einer Warnung (216) eine fahrzeugentferntere Linie (202) als Fahrbahnrandlinie vorgegeben wird.

10. Vorrichtung zur Fahrerinformation (10), mit Mitteln welche Fahrbahnlinien als Fahrbahnrandlinien erfassen und eine Warnung (38) für den Fahrer erzeugen, wenn das Fahrzeug die Fahrbahnrandlinie überschreitet oder zu überschreiten droht, **dadurch gekennzeichnet, dass** die Mittel ferner derart konfiguriert sind, dass eine Auswahl der Fahrbahnlinien dahingehend erfolgt, dass bei erkannten mehreren Linien, **die Fahrspurrandmarkierungen sind**, die fahrzeugentferntere Linie der Spurverlassenswarnung zugrunde gelegt wird.

## Claims

1. Method for informing drivers, wherein a warning (38) for the driver is generated if the driver threatens to leave the lane or leaves the lane, wherein the warning is determined on the basis of carriageway edge lines, **characterized in that**, if a plurality of lines (E, S) which are lane edge markings are detected (104), the line (E) which is relatively far from the vehicle is selected (112) for the determination of the warning (216).

2. Method according to Claim 1, **characterized in that**, when a junction (V) is detected which branches into two or more lines (E, S), the line (E) which is relatively far from the vehicle is selected for the determination of the warning.

3. Method according to one of the preceding claims, **characterized in that** the line which is relatively far from the vehicle is used as the basis for a predefined section of road and/or travel time of the warning.

4. Method according to one of the preceding claims, **characterized in that** junctions, starting from which the line which is relatively far from the vehicle is used as the basis for the warning, are determined from the carriageway edge lines which are determined.

5. Method according to one of the preceding claims, **characterized in that** the course of the vehicle (210, 212) is determined and the carriageway edge line (202, 204, 206) which is used as the basis for the warning is selected on the basis of the course.

6. Method according to Claim 5, **characterized in that** a new selection of the relevant line is made after a specific travel distance and/or travel time after a junction (V) which branches into at least one line and/or if a plurality of carriageway edge lines has been detected.

7. Method according to one of the preceding claims, **characterized in that** a warning (216) is output if the vehicle threatens to cross or crosses the selected line.

8. Method according to one of the preceding claims, **characterized in that** the warning (38) is issued optically, acoustically and/or haptically and/or constitutes a steering intervention (42) which counteracts the crossing of the carriageway edge line.

9. Method according to one of the preceding claims, **characterized in that** after a warning (216) a line (202) which is relatively far from the vehicle is predefined as a carriageway edge line.

10. Device (10) for informing drivers, having means which detect carriageway lines as carriageway edge lines and generate a warning (38) for the driver if the vehicle crosses or threatens to cross the carriageway edge line, **characterized in that** the means are also configured in such a way that the carriageway lines are selected in such a way that, if a plurality of lines which are lane edge markings are detected, the line which is relatively far from the vehicle is used as the basis for the lane departure warning.

## Revendications

1. Procédé d'information du conducteur, un avertissement (38) pour le conducteur étant généré lorsque le véhicule menace de quitter la voie de circulation ou quitte la voie de circulation, l'avertissement étant déterminé sur la base des lignes de bordure de la voie de circulation, **caractérisé en ce qu'**en cas de détection (104) de plusieurs lignes (E, S) qui sont des marquages de la bordure de la bande de circulation, la ligne (E) plus éloignée du véhicule est sélectionnée (112) pour déterminer l'avertissement (216).

2. Procédé selon la revendication 1, **caractérisé en ce que** lorsqu'une bifurcation (V) est détectée dans 2 lignes (E, S) ou plus, la ligne (E) plus éloignée du véhicule est sélectionnée pour déterminer l'avertissement.

3. Procédé selon l'une des revendications précédentes, **caractérisé en ce que** l'avertissement se base sur la ligne plus éloignée du véhicule pendant une portion de trajet et/ou une durée de trajet prédéfinie.

4. Procédé selon l'une des revendications précédentes, **caractérisé en ce que** les bifurcations à partir desquelles la ligne plus éloignée du véhicule sert de base à l'avertissement sont déterminées à partir des lignes de bordure de la voie de circulation.

5. Procédé selon l'une des revendications précédentes, **caractérisé en ce que** la trajectoire du véhicule (210, 212) est déterminée et la ligne de bordure de la voie de circulation (202, 204, 206) qui sert de base à l'avertissement est sélectionnée en se basant sur la trajectoire.

6. Procédé selon la revendication 5, **caractérisé en ce qu'**une nouvelle sélection de la ligne pertinente a lieu après une portion de trajet et/ou une durée de trajet donnée après avoir détecté une bifurcation (V) d'au moins une ligne et/ou de plusieurs lignes de bordure de la voie de circulation.

7. Procédé selon l'une des revendications précédentes, **caractérisé en ce qu'**un avertissement (216) est délivré lorsque le véhicule menace de franchir ou franchit la ligne sélectionnée.

8. Procédé selon l'une des revendications précédentes, **caractérisé en ce que** l'avertissement (38) a lieu sous forme optique, acoustique et/ou tactile et/ou représente une intervention dans la direction (42) qui contre le franchissement de la ligne de bordure de la voie de circulation.

9. Procédé selon l'une des revendications précédentes, **caractérisé en ce qu'**après un avertissement (216), une ligne plus éloignée du véhicule (202) est prédéfinie comme ligne de bordure de la voie de circulation.

10. Dispositif d'information du conducteur (10), comprenant des moyens qui détectent des lignes de voie de circulation en tant que lignes de bordure de la voie de circulation et génèrent un avertissement (38) pour le conducteur lorsque le véhicule franchit ou menace de franchir la ligne de bordure de voie de circulation, **caractérisé en ce que** les moyens sont en outre configurés de telle sorte qu'une sélection des lignes de voie de circulation s'effectue de telle sorte qu'en cas de détection de plusieurs lignes qui sont des marquages de la bordure de la bande de circulation, la ligne plus éloignée du véhicule sert de base à l'avertissement de sortie de bande de circulation.
